# EUROPEAN PATENT APPLICATION

(11) **EP 0 656 524 A1**
(43) Date of publication of application: **07.06.1995**
(21) Application number: 94830557.8
(22) Date of filing: 01.12.1994
(51) Int. Cl.: G01C 9/32

(54) **Spirit level**

(30) Priority: 02.12.1993 IT MI930942 U
(71) Applicant: MICRO ITALIANA S.p.A., I-36071 Arzignano (Vicenza) (IT)
(72) Inventor: Loffredo, Alessandro, Micro Italiana S.p.A., I-36071 Arzignano (Vicenza) (IT); Baratta, Giuseppe, Micro Italiana S.p.A., I-36071 Arzignano (Vicenza) (IT)
(74) Representative: Cicogna, Franco

(57) **Abstract**

The present invention relates to a spirit level, particularly designed for the building field, comprising a supporting construction defining a reference surface and supporting at least a clear material tube, partially filled with a liquid, so as to provide, inside this tube, a bubble, which can move along the tube, as the reference surface arrangement is changed.

In the level according to the invention there are provided lighting means arranged near the tube and which can be controllably energized or disenergized.

## Description

### BACKGROUND OF THE INVENTION

The present invention relates to an improved spirit level, which has been specifically designed for application in the building field.

As is known, in the building field, in order to control the horizontal arrangement of the building parts, as well as to control construction portions to be vertically made or to be made according to a desired inclination, generally at 45°, there is generally used a spirit level, which is also simply called water level or bubble. This instrument usually comprises a supporting construction having a substantially parallelepipedal configuration which, in the simplest embodiments thereof, defines a reference plane or surface, provided to be abutted against the surface the horizontal arrangement of which must be controlled and at least a clear material tube or small pipe, made for example of glass, which is partially filled with a liquid so that inside this tube there is formed a bubble adapted to be moved along the tube, as the inclination of the reference surface with a theoretical horizontal surface is changed. On the surface of the tube there are generally provided two marks, spaced from one another, which define the position of the bubble, as the surface on which is abutted the spirit level reference surface is perfectly horizontal. In other more complex embodiments, the spirit level comprises, in addition to the tube parallel to the reference surface, also a second tube, which is arranged perpendicular. to the reference surface, as well as a third tube which is arranged slanted at 45° with respect to said reference surface so as to allow to easily control vertical surfaces, or surfaces which are slanted at 45° with respect to a horizontal line.

Since, as stated, these instruments are usually employed in the building field, there frequently occur operation conditions in which is very difficult to detect the position of the bubble, because of a bad illumination. On the other hand, these conditions occur very frequently since, in the buildings being constructed there are not provided electric systems or since the operator must operate in a very reduced space, such as, for example, understairs or at room corners, which are not satisfactorily lightened.

Thus, in such a condition, is very difficult for an operator to properly detect the position of the bubble to provide a good accuracy in the work being made.

### SUMMARY OF THE INVENTION

Accordingly, the aim of the present invention is to overcome the above mentioned drawback, by providing a spirit level which is so designed as to greatly facilitate its use, specifically under poor visibility conditions.

Within the scope of the above mentioned aim, a main object of the present invention is to provide such a spirit level, which can be easily made and easily used.

Another object of the present invention is to provide a spirit level which provides a very accurate operation and is very reliable.

According to one aspect of the present invention, the above mentioned aim and objects, as well as yet other objects, which will become more apparent hereinafter, are achieved by a spirit level, specifically designed for the building field, comprising a supporting construction, defining a reference surface, and supporting at least a first tube of a clear material, said first tube being partially filled with a liquid, so as to provide inside said tube a bubble which can move along said tube as an arrangement of said reference surface is changed, characterized in that said spirit level further comprising lighting means arranged near said tube and which can be controllably energized or disenergized.

### BRIEF DESCRIPTION OF THE DRAWINGS

Further characteristics and advantages of the spirit level according to the present invention will become more apparent hereinafter from the following detailed disclosure of a preferred, though not exclusive, embodiment thereof which is illustrated, by way of an indicative but not limitative example, in the accompanying drawings, where:

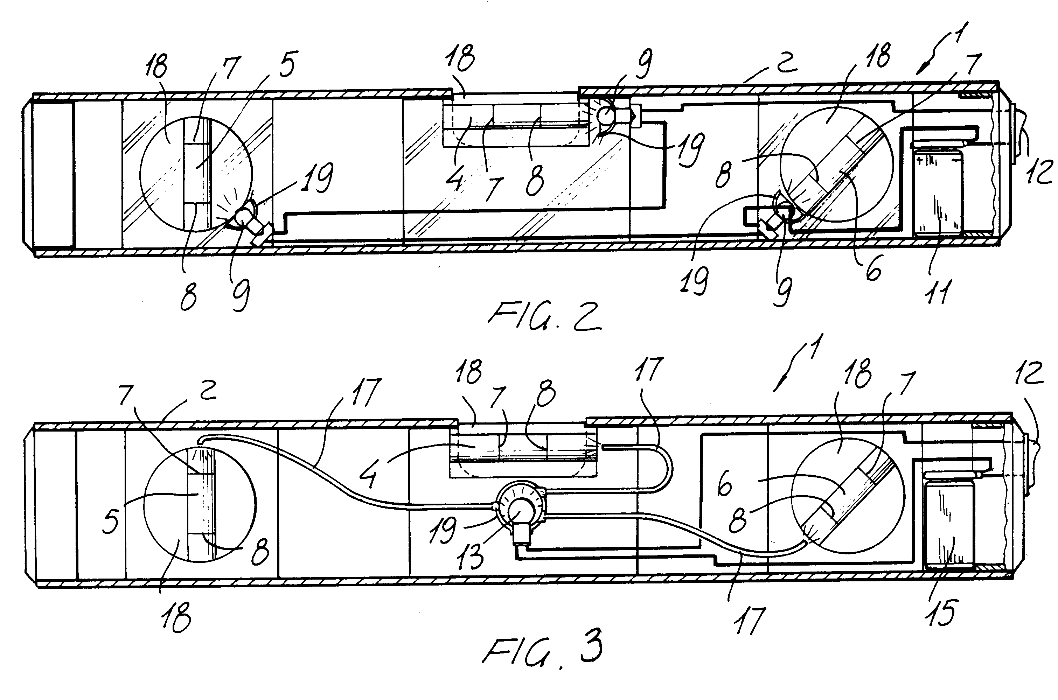

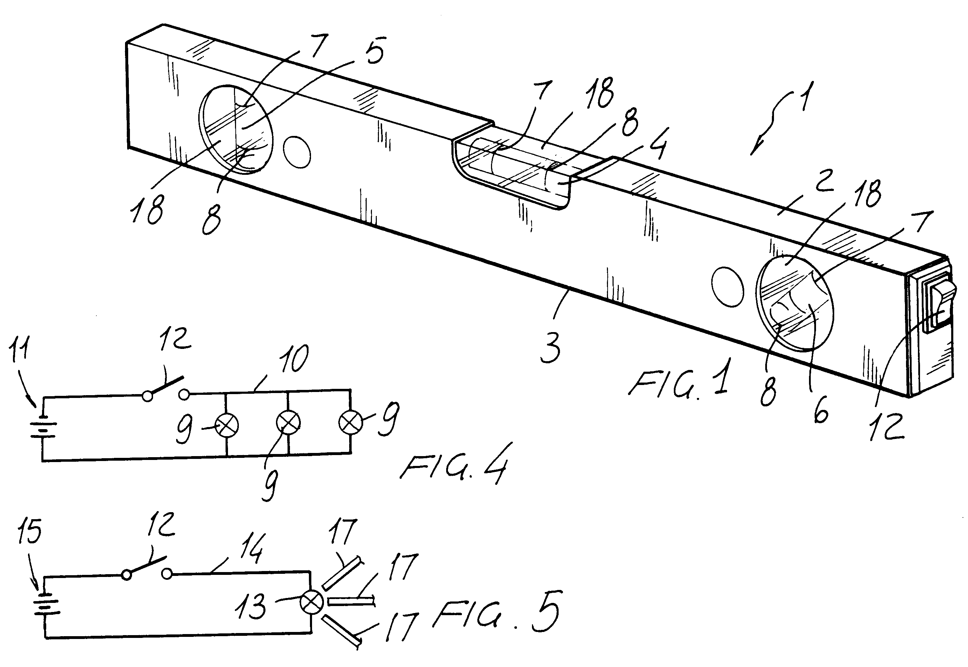

Figure 1 is a perspective view of the spirit level according to the present invention;
Figure 2 is a longitudinal cross-sectional view of the spirit level according to the present invention;
Figure 3 is a cross-sectional view, analogous to that of Figure 2, illustrating the subject spirit level according to a modified embodiment of the lighting means according to the present invention;
Figure 4 is a schematic diagram illustrating the lighting means with reference to Figure 2;
   and
Figure 5 is another schematic diagram illustrating the lighting means with reference to Figure 3.

### DESCRIPTION OF THE PREFERRED EMBODIMENTS

With reference to the number references of the above mentioned figures, the spirit level according to the present invention, which has been generally indicated at the reference number 1, comprises a supporting construction 2, of substantially parallelepipedal shape, defining, with a face thereof, a reference plane or surface 3 and which supports at least a tube 4 of a clear material; inside this tube there is provided, in a per se known manner, a liquid so as to form inside the tube a bubble which can move along said tube as the reference surface 3 arrangement is changed.

More specifically, the spirit level according to the present invention comprises a first tube 4, which is arranged parallel to the reference surface 3, a second tube 5, which is substantially made as said tube 4, but which is arranged with the axis thereof perpendicular to the reference surface 3, and a third tube 6, which is substantially made as the other two, but which is arranged with its axis slanted at 45° with respect to the reference surface 3.

As in prior spirit or water levels, in each tube there are provided two linear marks 7 and 8, spaced from one another, which define the proper position of the bubble provided inside each tube.

The spirit level according to the present invention comprises lighting or illumination means which are arranged near at least one of the tubes 4, 5, 6, preferably near all of said tubes, and which are used for detecting the inclination of the plane or surface against which is caused to abut the reference surface 3.

These lighting means can simply comprise lamps 9, which are arranged near the tubes 4, 5, 6 and which are power supplied through an electric circuit 10, connected to batteries 11, suitably housed inside the supporting construction 2.

The circuit 10 comprises a switch 12, by means of which the lamps 9 can be switched on and off, and which is preferably arranged on one of the small sides of the supporting construction 2, so that said switch can be easily operated.

As shown in particular in Figures 3 and 5, it is also possible to provide a single lamp 13, also power supplied, through a circuit 14, by batteries 15 and controlled by a switch 12. This lamp 13 is arranged inside the support construction 2 and is coupled to the tubes 4, 5 and 6 through optical fibre cables 17, extending from the lamp 13 and transmitting the light thereof to the tubes.

The tubes or small pipes 4, 5, 6 can be also formed inside small blocks 18 of a refracting material, for example a material which is commercially available with the trademark of Plexiglass, which operates as a light diffusing element for diffusing the light of the lamps 9 or of the lamp 13.

Near said lamps 9 or near said lamp 13 can also be provided reflective screens 19, so as to properly send the light to the blocks 18 or through the optical fibre cables 17.

From the above disclosure and from an observation of the figures of the accompanying drawings, it should be apparent that the invention fully achieves the intended aim and objects.

In particular, the fact is to be pointed out that a spirit level has been provided which can be easily used, without any problems with respect to a proper detection of the position of the bubble inside the tubes, even under a poor visibility condition, such as, for example, in reduced spaces or in rooms which can be not properly reached by the light.

In practicing the invention, the used materials, as well as the contingent size and shapes, can be any, depending on requirements.

## Claims

1. A spirit level, specifically designed for the building field, comprising a supporting construction, defining a reference surface, and supporting at least a first tube of a clear material, said first tube being partially filled with a liquid, so as to provide inside said tube a bubble which can move along said tube as an arrangement of said reference surface is changed, characterized in that said spirit level further comprising lighting means arranged near said tube and which can be controllably energized or disenergized.

2. A spirit level, according to Claim 1, wherein said first tube is arranged parallel to said reference surface.

3. A spirit level, according to Claim 1, wherein said spirit level further comprises a second tube, substantially made as said first tube, and arranged perpendicular to said reference surface, at said second tube lighting means being provided.

4. A spirit level, according to Claim 1, wherein said spirit level further comprises a third tube, made substantially as said first tube and arranged inclined at 45° with respect to said reference surface, at said third tube there being provided lighting means.

5. A spirit level, according to Claim 1, wherein said lighting means comprise a lamp arranged near a respective tube and power supplied, through a power supplying circuit, by an electric power source arranged inside said supporting construction.

6. A spirit level, according to Claim 1, wherein said lighting means comprise a light source, arranged inside said supporting construction and coupled to a related tube through an optical fibre cable.

7. A spirit level, according to Claim 1, characterized in that said tubes are embedded in light refracting material blocks.

8. A spirit level, according to Claim 1, characterized in that said circuit comprises a switch associated with said supporting construction and which can be accessed from the outside.
